# EUROPEAN PATENT APPLICATION

(11) **EP 4 819 374 A1**
(43) Date of publication of application: **07.10.2026**
(21) Application number: 24914838.8
(22) Date of filing: 21.08.2024
(51) Int. Cl.: H01M 50/609, H01M 50/60

(54) **ELECTROLYTE INJECTION SYSTEM AND ELECTROLYTE INJECTION METHOD FOR BATTERY**

(30) Priority: 03.01.2024 CN 202410009314
(71) Applicant: Contemporary Amperex Technology Co., Limited, Ningde, Fujian 352100 (CN); Contemporary Amperex Runzhi Software Technology Limited, Ningde, Fujian 352100 (CN)
(72) Inventor: CHEN, Rongqiang, Ningde, Fujian 352100 (CN); WU, Chaoyang, Ningde, Fujian 352100 (CN); GUAN, Feng, Ningde, Fujian 352100 (CN); WANG, Zhihui, Ningde, Fujian 352100 (CN)
(74) Representative: Kraus & Lederer PartGmbB
(86) International application number: PCT/CN2024/113728
(87) International publication number: WO 2025/145616

(57) **Abstract**

An electrolyte injection system and electrolyte injection method for a battery. The electrolyte injection system comprises a mounting base (1), an electrolyte injection module (2), and a weighing module (3). The electrolyte injection module (2) comprises a tray (21) and electrolyte injection tanks (22). The weighing module (3) is arranged on the mounting base (1). The electrolyte injection tanks (22) have a pre-assembled state and an assembled state. When in the pre-assembled state, the electrolyte injection tanks (22) are pre-assembled on the tray (21), the weight of the electrolyte injection tanks (22) being borne by the tray (21). When in the assembled state, the electrolyte injection tanks (22) are assembled on the weighing module (3), the weight of the electrolyte injection tanks (22) being borne by the weighing module (3). The weighing module (3) is used for weighing the electrolyte injection tanks (22). The electrolyte injection system is provided with the weighing module (3) for weighing the electrolyte injection tanks (22) in real time so as to acquire the quantity of an electrolyte injected into the electrolyte injection tanks (22), does not need an electrolyte injection pump for controlling the quantity of the injected electrolyte, and likewise does not require a bubble removing action, thus improving electrolyte preparation efficiency.

## Description

### CROSS-REFERENCE TO RELATED APPLICATION

This disclosure claims priority to Chinese Patent Application No. 202410009314.1, filed on January 03, 2024 and entitled "ELECTROLYTE INJECTION SYSTEM FOR BATTERY AND ELECTROLYTE INJECTION METHOD FOR BATTERY", which is incorporated herein by reference in its entirety.

### TECHNICAL FIELD

This disclosure relates to the field of battery technologies, and in particular, to an electrolyte injection system for battery and an electrolyte injection method for battery.

### BACKGROUND

This section is intended to provide background or context for embodiments of this disclosure. The description herein is not admitted to be the prior art by virtue of its inclusion in this section.

In the related art, an electrolyte storage tank needs to be provided for storing an electrolyte delivered from an electrolyte room, and an electrolyte injection pump quantitatively pumps the electrolyte from the electrolyte storage tank into a containing apparatus. After a battery is evacuated, an electrolyte injection valve of the containing apparatus is opened, and the electrolyte in the containing apparatus is injected into an electrolyte injection cup. It can be seen that each electrolyte injection cup needs to correspond to one electrolyte injection pump, and the electrolyte storage tank and the containing apparatus need to be provided for storing the electrolyte delivered from the electrolyte room, which occupies space and increases device costs. In addition, the electrolyte injection amount is controlled by the electrolyte injection pump, and bubbles in the electrolyte reduce the control accuracy of the electrolyte injection amount, so degassing and impurity filtering operations are required for the electrolyte, which reduces the electrolyte preparation efficiency.

### SUMMARY

In view of this, embodiments of this disclosure aim to provide an electrolyte injection system for battery and an electrolyte injection method for battery, which require neither an electrolyte injection pump for controlling an electrolyte injection amount nor a degassing operation, thereby reducing costs and occupied space and improving electrolyte preparation efficiency.

To achieve the foregoing objective, a first aspect of the embodiments of this disclosure provides an electrolyte injection system for battery, including:
a mounting base;
an electrolyte injection module including a tray and an electrolyte injection cup; and
a weighing module disposed on the mounting base;
where the electrolyte injection cup includes a pre-assembly state and an assembled state, where when the electrolyte injection cup is in the pre-assembly state, the electrolyte injection cup is pre-assembled on the tray and a weight of the electrolyte injection cup is borne by the tray; and when the electrolyte injection cup is in the assembled state, the electrolyte injection cup is assembled on the weighing module and a weight of the electrolyte injection cup is borne by the weighing module, the weighing module being configured to weigh the electrolyte injection cup.

In the electrolyte injection system for battery provided in the embodiments of this disclosure, the electrolyte injection system includes the mounting base, the electrolyte injection module, and the weighing module. The electrolyte injection cup includes the pre-assembly state and the assembled state. When the electrolyte injection cup is in the pre-assembly state, the electrolyte injection cup is pre-assembled on the tray, and the weight of the electrolyte injection cup is borne by the tray. When the electrolyte injection cup is in the assembled state, the electrolyte injection cup is assembled on the weighing module, and the weight of the electrolyte injection cup is borne by the weighing module, the weighing module being configured to weigh the electrolyte injection cup. That is, the weighing module is provided to weigh the electrolyte injection cup. To be specific, the weighing module can weigh the electrolyte injection cup in real time to obtain an electrolyte injection amount in the electrolyte injection cup, which requires neither an electrolyte injection pump for controlling the electrolyte injection amount nor a degassing operation, thereby improving the electrolyte preparation efficiency. In addition, an electrolyte from an electrolyte room can be directly injected into the electrolyte injection cup after being filtered by a filter, which simplifies the structure, reduces costs, and reduces occupied space, improving the structural compactness of the electrolyte injection system.

In addition, after the electrolyte injection into the electrolyte injection cup is completed, a real-time weight A₂ (A₂ is the weight of the electrolyte injection cup with the electrolyte injected, that is, the weight of the electrolyte injection cup itself plus the weight of the electrolyte) of the electrolyte injection cup can be obtained through the weighing module. After the electrolyte in the electrolyte injection cup is injected into the battery, the electrolyte injection cup is weighed to obtain A₃ (A₃ is the weight of the electrolyte injection cup itself plus the weight of the residual electrolyte). Thus, the weight of the electrolyte injected into the battery is A₂ - A₃. In other words, with the electrolyte injection method of the embodiments of this disclosure used, separate weighing processes of the battery before and after electrolyte injection can be eliminated, thereby improving the production efficiency.

In some embodiments, the tray includes at least one pre-assembly support position, and the electrolyte injection cup includes at least one pre-assembly support portion, where when the electrolyte injection cup is in the pre-assembly state, the electrolyte injection cup is supported on the pre-assembly support position via the pre-assembly support portion and is located at a first height relative to the tray.

In other words, the tray is provided with at least one pre-assembly support position, and the electrolyte injection cup is provided with at least one pre-assembly support portion, where when the electrolyte injection cup is in the pre-assembly state, the electrolyte injection cup is supported on the pre-assembly support position via the pre-assembly support portion, so as to achieve pre-assembly of the electrolyte injection cup.

In some embodiments, the weighing module includes at least one assembly support position, and the electrolyte injection cup includes at least one assembly support portion, where when the electrolyte injection cup is in the assembled state, the electrolyte injection cup is supported on the first assembly support position via the assembly support portion and is located at a second height relative to the tray, the second height being not equal to the first height.

In other words, the weighing module is provided with at least one assembly support position, and the electrolyte injection cup is provided with at least one assembly support portion, where when the electrolyte injection cup is in the assembled state, the electrolyte injection cup is supported on the assembly support position via the assembly support portion, so as to achieve assembly of the electrolyte injection cup.

In some embodiments, the tray is provided with a clearance area, and the electrolyte injection cup passes through the clearance area via the weighing module.

With the clearance area provided on the tray, when the electrolyte injection cup is in the pre-assembly state, the electrolyte injection cup passes through the clearance area and is supported on the pre-assembly support position via the pre-assembly support portion, so as to achieve pre-assembly of the electrolyte injection cup. When the electrolyte injection cup is in the assembled state, the electrolyte injection cup is supported on the assembly support position via the assembly support portion, so as to achieve assembly of the electrolyte injection cup. For example, the assembly support position fits with the assembly support portion to lift the electrolyte injection cup, such that the pre-assembly support portion is separated from the pre-assembly support position, and thus the weight of the electrolyte injection cup is borne by the weighing module.

In some embodiments, the mounting base is provided with at least one first support column, and the tray is provided with at least one first support hole, the tray being supported on the first support column via the first support hole.

In other words, the mounting base is provided with at least one first support column, and the tray is provided with at least one first support hole, such that the first support hole fits with the first support column to allow the mounting base to support the tray, which provides a simple and reliable connection structure.

In some embodiments, a pre-assembly support portion protrudes from at least part of an outer side wall of the electrolyte injection cup, where when the electrolyte injection cup is in the pre-assembly state, the electrolyte injection cup is supported on an upper surface of the tray via the pre-assembly support portion and is located at a first height relative to the tray.

The pre-assembly support portion protrudes from at least part of the outer side wall of the electrolyte injection cup, where when the electrolyte injection cup is in the pre-assembly state, the electrolyte injection cup is supported on the upper surface of the tray via the pre-assembly support portion, which provides a simple and reliable connection structure, facilitates pre-assembly of the electrolyte injection cup on the tray, and facilitates switching of the electrolyte injection cup between the pre-assembly state and the assembled state.

In some embodiments, a bottom of the electrolyte injection cup is provided with at least one second support hole, and the weighing module is disposed below the tray and includes at least one second support column, where when the electrolyte injection cup is in the assembled state, the pre-assembly support portion is spaced apart from the upper surface of the tray, and the electrolyte injection cup is supported on the second support column via the second support hole and is located at a second height relative to the tray, the second height being not equal to the first height.

The bottom of the electrolyte injection cup is provided with at least one second support hole, and the weighing module is provided with at least one second support column, where when the electrolyte injection cup is in the pre-assembly state, the electrolyte injection cup is supported on the upper surface of the tray via the pre-assembly support portion. During the process of assembling the electrolyte injection module on the mounting base, the second support column on the weighing module contacts the second support hole at the bottom of the electrolyte injection cup and gradually lifts the electrolyte injection cup, such that the pre-assembly support portion of the electrolyte injection cup gradually moves away from the upper surface of the tray. When the tray is completely supported on the mounting base, the weighing module completely lifts the electrolyte injection cup, and the electrolyte injection cup loses contact with the tray, that is, the pre-assembly support portion is spaced apart from the upper surface of the tray, so as to achieve switching of the electrolyte injection cup from the pre-assembly state pre-assembled on the tray to the assembled state assembled on the weighing module. In this case, the electrolyte injection cup is located at the second height relative to the tray.

In some embodiments, the weighing module includes a weighing device and a weighing bracket disposed on the weighing device, the second support column is disposed on the weighing bracket, and the weighing device is configured to weigh the electrolyte injection cup.

In other words, the weighing module includes the weighing device and the weighing bracket, the weighing bracket is disposed on the weighing device, and the weighing bracket is provided with the second support column for contacting the second support hole at the bottom of the electrolyte injection cup to support the electrolyte injection cup, while the weighing device is located below the weighing bracket. Thus, when the weighing bracket lifts and supports the electrolyte injection cup from below, the weighing device can weigh the electrolyte injection cup.

In some embodiments, the weighing module further includes a mounting plate, and the weighing device is disposed on the mounting plate.

The mounting plate is provided, the weighing device is disposed on the mounting plate, and the mounting plate is assembled on the mounting base, thereby facilitating assembly of the weighing device.

In some embodiments, the weighing module includes a plurality of weighing units, each weighing unit includes the weighing device and the weighing bracket, the electrolyte injection module includes a plurality of electrolyte injection cups, and the electrolyte injection cups are in one-to-one correspondence with the weighing units.

The weighing module includes a plurality of weighing units and the weighing units are in one-to-one correspondence with the electrolyte injection cups, so that the plurality of electrolyte injection cups can be weighed simultaneously, thereby improving the electrolyte preparation effect.

In some embodiments, the electrolyte injection module further includes a guide member disposed on the tray for guiding movement of the electrolyte injection cup along its height direction.

It can be understood that when the electrolyte injection cup switches from the pre-assembly state pre-assembled on the tray to the assembled state assembled on the weighing module, the electrolyte injection cup moves along its height direction. The guide member being provided to guide movement of the electrolyte injection cup along its height direction can prevent deviation of the electrolyte injection cup during lifting, thereby improving the reliability of the movement process of the electrolyte injection cup.

In some embodiments, the guide member is a guide bracket, a guide groove is defined between the guide bracket and the upper surface of the tray, a top wall of the guide groove is provided with a guide column extending toward the upper surface of the tray, the pre-assembly support portion is provided with a guide hole, and the guide column slidably fits with the guide hole to guide movement of the electrolyte injection cup along its height direction.

The guide bracket having the guide column is provided, and the pre-assembly support portion is provided with the guide hole, such that the guide column slidably fits with the guide hole to guide movement of the electrolyte injection cup along its height direction, which can prevent deviation of the electrolyte injection cup during lifting. In addition, the guide bracket can also limit the electrolyte injection cup and can prevent the electrolyte injection cup from being completely separated from the tray to some extent.

A second aspect of the embodiments of this disclosure provides an electrolyte injection method for battery, applied to the foregoing electrolyte injection system for battery, where the electrolyte injection module further includes an electrolyte injection means and a valve opening means disposed on the electrolyte injection cup, the valve opening means having an open state and a closed state; where
the electrolyte injection method includes an electrolyte preparation step, the electrolyte preparation step including:
obtaining an initial weight A₁ of the electrolyte injection cup through the weighing module;
opening an electrolyte injection valve of the electrolyte injection means and injecting an electrolyte into the electrolyte injection cup;
obtaining a real-time weight A₂ of the electrolyte injection cup through the weighing module;
determining whether an electrolyte preparation requirement is satisfied by comparing A₂ - A₁ with a target weight A₀; and
if the electrolyte preparation requirement is satisfied, completing electrolyte preparation.

During electrolyte preparation for the electrolyte injection cup, the weighing module and the electrolyte injection module are first assembled on the mounting base, the electrolyte injection cup switches from the pre-assembly state to the assembled state, the weight of the electrolyte injection cup is borne by the weighing module, and the weighing module is configured to weigh the electrolyte injection cup. The weighing module obtains the initial weight A₁ (that is, the weight of each electrolyte injection cup before electrolyte injection) of each electrolyte injection cup. After the weighing is completed, the system records the initial weight A₁ of each electrolyte injection cup, opens the electrolyte injection valve of the electrolyte injection means, injects the electrolyte into the electrolyte injection cup, obtains the real-time weight A₂ of the electrolyte injection cup through the weighing module, and determines whether the electrolyte preparation requirement is satisfied by comparing A₂ - A₁ with the target weight A₀. If the electrolyte preparation requirement is satisfied, electrolyte preparation is completed. In other words, the weighing module is provided to weigh the electrolyte injection cup, so as to determine the electrolyte injection amount in the electrolyte injection cup, which requires neither an electrolyte injection pump for controlling the electrolyte injection amount nor a degassing operation, thereby improving the electrolyte preparation efficiency. In addition, an electrolyte from an electrolyte room can be directly injected into the electrolyte injection cup after being filtered by a filter, which simplifies the structure, reduces costs, and reduces occupied space, improving the structural compactness of the electrolyte injection system. The electrolyte preparation step of this electrolyte injection method has high efficiency, and before the normally closed valve opening means is unlocked, the electrolyte injection cup remains relatively sealed from the external environment, ensuring no electrolyte leakage during electrolyte injection weighing. Meanwhile, the electrolyte injection weighing operation can be completed when the battery is assembled on the tray, thereby improving the production throughput.

In addition, after the electrolyte injection into the electrolyte injection cup is completed, a real-time weight A₂ (A₂ is the weight of the electrolyte injection cup with the electrolyte injected, that is, the weight of the electrolyte injection cup itself plus the weight of the electrolyte) of the electrolyte injection cup can be obtained through the weighing module. After the electrolyte in the electrolyte injection cup is injected into the battery, the electrolyte injection cup is weighed to obtain A₃ (A₃ is the weight of the electrolyte injection cup itself plus the weight of the residual electrolyte). Thus, the weight of the electrolyte injected into the battery is A₂ - A₃. In other words, with the electrolyte injection method of the embodiments of this disclosure used, separate weighing processes of the battery before and after electrolyte injection can be eliminated, thereby improving the production efficiency.

In some embodiments, the determining whether an electrolyte preparation requirement is satisfied by comparing A₂ - A₁ with a target weight A₀ includes:
if A₂ - A₁ ≥ A₀, determining that the electrolyte preparation requirement is satisfied; and
if A₂ - A₁ < A₀, determining that the electrolyte preparation requirement is not satisfied, and continuing to inject the electrolyte into the electrolyte injection cup.

In other words, if the weight A₂ - A₁ of the electrolyte injected into the electrolyte injection cup is greater than or equal to the target weight A₀, meaning that the electrolyte stored in the electrolyte injection cup is sufficient to meet the amount of the electrolyte to be injected into the battery, the electrolyte preparation requirement is satisfied. Conversely, if the weight A₂ - A₁ of the electrolyte injected into the electrolyte injection cup is less than the target weight A₀, meaning that the electrolyte stored in the electrolyte injection cup does not meet the amount of the electrolyte to be injected into the battery, the electrolyte preparation requirement is not satisfied, and the electrolyte continues to be injected into the electrolyte injection cup until the electrolyte preparation requirement is satisfied.

In some embodiments, the if A₂ - A₁ ≥ A₀, determining that the electrolyte preparation requirement is satisfied includes:
determining whether to close the electrolyte injection valve based on an electrolyte flow rate q of the electrolyte injection means and a reaction time t of the electrolyte injection valve.

In the embodiments of this disclosure, whether to close the electrolyte injection valve is determined based on the electrolyte flow rate q of the electrolyte injection means and the reaction time t of the electrolyte injection valve. In other words, the electrolyte injection amount in the reaction time of the electrolyte injection valve is calculated, and the electrolyte injection valve is closed in advance, thereby improving the electrolyte preparation accuracy.

In some embodiments, the determining whether to close the electrolyte injection valve based on an electrolyte flow rate q of the electrolyte injection means and a reaction time t of the electrolyte injection valve includes:
if A₂ - A₁ + qt ≥ A₀, closing the electrolyte injection valve; and
if A₂ - A₁ + qt < A₀, opening the electrolyte injection valve and continuing to inject the electrolyte into the electrolyte injection cup.

Through experiments, the electrolyte flow rate q of the electrolyte injection means is obtained, and the reaction time t of the electrolyte injection valve is measured. The electrolyte injection amount in the closing reaction time t of the electrolyte injection valve at a normal flow rate is calculated as qt, that is, the corrected target electrolyte injection amount is the original target electrolyte injection amount minus the electrolyte injection amount in the closing reaction time t of the electrolyte injection valve, namely A₂ - A₁ + qt ≥ A₀. If A₂ - A₁ + qt < A₀, the electrolyte preparation requirement is not satisfied, the electrolyte injection valve is opened, and the electrolyte continues to be injected into the electrolyte injection cup until the electrolyte preparation requirement is satisfied, thereby improving the electrolyte preparation accuracy.

In some embodiments, the battery includes an on-off valve having an open state and a closed state, the electrolyte injection system further includes an evacuation module independent of the electrolyte injection module, and the electrolyte injection method further includes an evacuation step, where the electrolyte preparation step is performed before the evacuation step or simultaneously with the evacuation step, the evacuation step including:
connecting an evacuation pipeline of the evacuation module to the on-off valve such that the on-off valve is in the open state;
controlling an evacuation means of the evacuation module to evacuate the battery; and
after determining completion of the evacuation, separating the evacuation pipeline from the on-off valve such that the on-off valve is in the closed state.

During evacuation, the evacuation pipeline of the evacuation module is connected to the on-off valve such that the on-off valve is in the open state, the evacuation means of the evacuation module is controlled to evacuate the battery, and after completion of the evacuation is determined, the evacuation pipeline is separated from the on-off valve such that the on-off valve is in the closed state. Thus, the evacuation step is completed. The electrolyte injection system further includes the evacuation module independent of the electrolyte injection module. In this way, the evacuation pipeline of the evacuation module and the electrolyte injection pipeline of the electrolyte injection module are not shared, preventing blockage of pipelines and valve bodies caused by diffusion of the residual electrolyte in the pipeline to other pipelines and valve bodies of the evacuation module during the evacuation. Moreover, the electrolyte preparation step is performed before the evacuation step or simultaneously with the evacuation step. Thus, the electrolyte can be injected into the electrolyte injection cup in advance at any moment before the battery is combined with the electrolyte injection cup, which reduces the serial processing time (electrolyte preparation time), improving the production efficiency.

In some embodiments, the electrolyte injection method further includes an electrolyte injection step after the evacuation step and the electrolyte preparation step, the electrolyte injection step including:
connecting the valve opening means to the on-off valve such that both the valve opening means and the on-off valve are in the open state;
controlling the electrolyte injection module to inject the electrolyte into the battery; and
after determining completion of the electrolyte injection, separating the valve opening means from the on-off valve such that both the valve opening means and the on-off valve are in the closed state.

During electrolyte injection, a lifting system brings the valve opening means of the electrolyte injection cup into contact with the on-off valve of the battery (for example, controlling the tray of the electrolyte injection cup to move toward the battery, or controlling the tray of the battery to move toward the electrolyte injection cup). First, the valve opening means of the electrolyte injection cup contacts the on-off valve of the battery, and the electrolyte injection channel formed after contact remains sealed from the external environment. Because the valve opening means and the on-off valve are subjected to an interaction force, the on-off valve is forced open, and the valve opening means is also forced open. In this case, both the valve opening means and the on-off valve are in the open state, and the electrolyte injection module is controlled to inject the electrolyte into the battery. After completion of the electrolyte injection is determined, the valve opening means is separated from the on-off valve such that both the valve opening means and the on-off valve are in the closed state.

In the electrolyte injection system for battery provided in the embodiments of this disclosure, the electrolyte injection system includes the mounting base, the electrolyte injection module, and the weighing module. The electrolyte injection cup includes the pre-assembly state and the assembled state. When the electrolyte injection cup is in the pre-assembly state, the electrolyte injection cup is pre-assembled on the tray, and the weight of the electrolyte injection cup is borne by the tray. When the electrolyte injection cup is in the assembled state, the electrolyte injection cup is assembled on the weighing module, and the weight of the electrolyte injection cup is borne by the weighing module, the weighing module being configured to weigh the electrolyte injection cup. The weighing module is provided to weigh the electrolyte injection cup. To be specific, the weighing module can weigh the electrolyte injection cup in real time to obtain an electrolyte injection amount in the electrolyte injection cup, which requires neither an electrolyte injection pump for controlling the electrolyte injection amount nor a degassing operation, thereby improving the electrolyte preparation efficiency. In addition, an electrolyte from an electrolyte room can be directly injected into the electrolyte injection cup after being filtered by a filter, which simplifies the structure, reduces costs, and reduces occupied space, improving the structural compactness of the electrolyte injection system.

In addition, after the electrolyte injection into the electrolyte injection cup is completed, a real-time weight A₂ (A₂ is the weight of the electrolyte injection cup with the electrolyte injected, that is, the weight of the electrolyte injection cup itself plus the weight of the electrolyte) of the electrolyte injection cup can be obtained through the weighing module. After the electrolyte in the electrolyte injection cup is injected into the battery, the electrolyte injection cup is weighed to obtain A₃ (A₃ is the weight of the electrolyte injection cup itself plus the weight of the residual electrolyte). Thus, the weight of the electrolyte injected into the battery is A₂ - A₃. In other words, with the electrolyte injection method of the embodiments of this disclosure used, separate weighing processes of the battery before and after electrolyte injection can be eliminated, thereby improving the production efficiency.

### BRIEF DESCRIPTION OF DRAWINGS

FIG. 1 is a schematic structural diagram of an electrolyte injection system for battery according to an embodiment of this disclosure from a first perspective, where an electrolyte injection cup is in an assembled state;
FIG. 2 is a schematic structural diagram of an electrolyte injection system for battery according to an embodiment of this disclosure from a second perspective, where an electrolyte injection cup is in a pre-assembly state;
FIG. 3 is an exploded view of FIG. 1;
FIG. 4 is a schematic structural diagram of an electrolyte injection system for battery according to an embodiment of this disclosure from a third perspective, where an electrolyte injection cup is in a pre-assembly state;
FIG. 5 is an enlarged view of position A in FIG. 4;
FIG. 6 is a schematic structural diagram of an electrolyte injection system for battery according to an embodiment of this disclosure from a fourth perspective, where an electrolyte injection cup is in an assembled state; and
FIG. 7 is a schematic flowchart of an electrolyte preparation step according to an embodiment of this disclosure.

### Description of reference signs

1. mounting base; 1a. first support column; 2. electrolyte injection module; 21. tray; 21a. clearance area; 21b. first support hole; 22. electrolyte injection cup; 22a. pre-assembly support portion; 22b. second support hole; 22c. guide hole; 3. weighing module; 31. weighing unit; 311. weighing device; 312. weighing bracket; 312a. second support column; 32. mounting plate; 4. guide member; and 4a. guide column.

### DESCRIPTION OF EMBODIMENTS

It should be noted that in absence of conflicts, the embodiments and technical features in the embodiments in this disclosure may be combined with each other. The detailed description in the description of embodiments should be understood as the explanation of the essence of this disclosure and should not be considered as any improper limitation on this disclosure.

Unless otherwise defined, all technical and scientific terms used herein shall have the same meanings as commonly understood by persons skilled in the art to which this disclosure relates. The terms used herein are intended to merely describe the specific embodiments rather than to limit this disclosure. The terms "include", "have", and any variations thereof in this disclosure are intended to cover non-exclusive inclusions.

In the description of the embodiments of this disclosure, the technical terms "first", "second", "third", and the like are merely intended to distinguish between different objects, and shall not be understood as any indication or implication of relative importance or any implicit indication of the number, specific sequence, or primary-secondary relationship of the technical features indicated. In the description of the embodiments of this disclosure, "a plurality of" means more than two, unless otherwise specifically defined.

In this specification, reference to "embodiment" means that specific features, structures, or characteristics described with reference to the embodiment may be incorporated in at least one embodiment of this disclosure. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the description of the embodiments of this disclosure, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between the contextually associated objects.

In the description of the embodiments of this disclosure, the orientations or positional relationships indicated by the technical terms "length", "width", "thickness", "upper", "lower", "front", "rear", "left", "right", "vertical", "horizontal", "top", "bottom", "inside", "outside", "circumferential", "height direction", "first direction", "second direction", and the like are based on the orientations or positional relationships shown in the accompanying drawings. These terms are merely for ease and brevity of the description of the embodiments of this disclosure rather than indicating or implying that the means or elements mentioned must have specific orientations, or must be constructed, manipulated, or used according to specific orientations, and therefore shall not be construed as any limitations on the embodiments of this disclosure.

In the description of the embodiments of this disclosure, unless otherwise specified and defined explicitly, the technical terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this disclosure as appropriate to specific situations.

In the description of the embodiments of this disclosure, unless otherwise specified and defined explicitly, the technical term "contact" should be understood in its general sense. For example, it may refer to direct contact, contact via an intermediate medium layer, contact between the two in contact with substantially no interaction force, or contact between the two in contact with an interaction force.

With the development of clean energy, more devices use electric energy as driving energy, and thus traction batteries capable of storing a large amount of electric energy and supporting repeated charging and discharging, such as lithium-ion batteries, have developed rapidly. Traction batteries have been widely used in energy storage power supply systems such as hydroelectric, thermal, wind, and solar power plants, and many other fields including electric transportation tools such as electric bicycles, electric motorcycles, and electric vehicles, and aerospace.

The battery mentioned in the embodiments of this disclosure is a single physical module that includes one or more battery cells for providing higher voltage and capacity. For example, the battery mentioned in this disclosure may include a battery module, a battery pack, or the like. The battery generally includes a box for packaging one or more battery cells. The box can prevent liquids or other foreign matter from affecting charging or discharging of the battery cell.

In this disclosure, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this disclosure. The battery cell may be cylindrical, cuboid, or of another shape. This is not limited in the embodiments of this disclosure either.

The battery cell includes an electrode assembly and an electrolyte. The electrode assembly includes a positive electrode plate, a negative electrode plate, and a separator. The battery cell mainly relies on migration of metal ions between the positive electrode plate and the negative electrode plate to work. The positive electrode plate includes a positive electrode current collector and a positive electrode active substance layer. The positive electrode active substance layer is applied on a surface of the positive electrode current collector. The part of the positive electrode current collector uncoated with the positive electrode active substance layer protrudes out of the part of the positive electrode current collector coated with the positive electrode active substance layer and serves as a positive tab. A lithium-ion battery is used as an example, for which, the positive electrode current collector may be made of aluminum, and the positive electrode active substance may be lithium cobalt oxide, lithium iron phosphate, ternary lithium, lithium manganate oxide, or the like. The negative electrode plate includes a negative electrode current collector and a negative electrode active substance layer. The negative electrode active substance layer is applied on a surface of the negative electrode current collector. The part of the negative electrode current collector uncoated with the negative electrode active substance layer protrudes out of the part of the negative electrode current collector coated with the negative electrode active substance layer and serves as a negative tab. The negative electrode current collector may be made of copper, and the negative electrode active substance may be carbon, silicon, or the like. To allow a large current to pass through without any fusing, a plurality of positive tabs are provided and stacked together, and a plurality of negative tabs are provided and stacked together. The separator may be made of PP (polypropylene, polypropylene), PE (polyethylene, polyethylene), or the like.

The battery cell further includes an insulating film and a housing. The insulating film covers the exterior of the electrode assembly, and the housing packages the electrode assembly covered with the insulating film to form the battery cell. The insulating film may be a Mylar film (mylar film), and the housing may be an aluminum shell. After the electrode assembly is wound and formed, package of the Mylar film and the housing is completed through a Mylar wrapping process and a housing insertion process. The Mylar film can seal and protect the electrode assembly, and can effectively insulate the electrode assembly from the housing to prevent internal short circuit of the battery cell. The housing can provide protection.

The electrolyte injection process is an important step during battery manufacturing, and the electrolyte injection accuracy is directly related to the cycling performance, consistency, and the like of lithium ions.

In the related art, an electrolyte storage tank needs to be provided for storing an electrolyte delivered from an electrolyte room, and an electrolyte injection pump quantitatively pumps the electrolyte from the electrolyte storage tank into a containing apparatus. After a battery is evacuated, an electrolyte injection valve of the containing apparatus is opened, and the electrolyte in the containing apparatus is injected into an electrolyte injection cup. After the electrolyte injection into the electrolyte injection cup is completed, the electrolyte injection valve is closed, and the battery and the electrolyte injection cup are transferred to the next process together. It can be seen that each electrolyte injection cup needs to correspond to one electrolyte injection pump, and the electrolyte storage tank and the containing apparatus need to be provided for storing the electrolyte delivered from the electrolyte room, which occupies space and increases device costs. In addition, the electrolyte injection amount is controlled by the electrolyte injection pump, and bubbles in the electrolyte reduce the control accuracy of the electrolyte injection amount, so degassing and impurity filtering operations are required for the electrolyte, which reduces the electrolyte preparation efficiency.

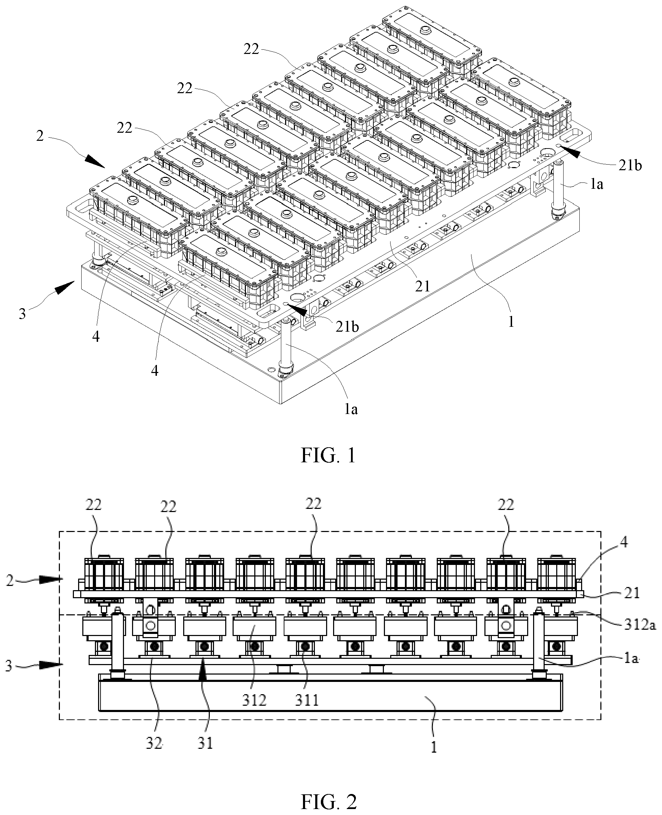

To improve the electrolyte preparation efficiency, reduce costs, and reduce occupied space, referring to FIGs. 1 to 6, the embodiments of this disclosure provide an electrolyte injection system for battery. The electrolyte injection system includes a mounting base 1, an electrolyte injection module 2, and a weighing module 3. The electrolyte injection module 2 includes a tray 21 and an electrolyte injection cup 22. The weighing module 3 is disposed on the mounting base 1. The electrolyte injection cup 22 includes a pre-assembly state and an assembled state. When the electrolyte injection cup 22 is in the pre-assembly state, the electrolyte injection cup 22 is pre-assembled on the tray 21, and the weight of the electrolyte injection cup 22 is borne by the tray 21. When the electrolyte injection cup 22 is in the assembled state, the electrolyte injection cup 22 is assembled on the weighing module 3, and the weight of the electrolyte injection cup 22 is borne by the weighing module 3. The weighing module 3 is configured to weigh the electrolyte injection cup 22.

The specific structure of the mounting base 1 is not limited herein, and the mounting base 1 is the main support structure for supporting and installing the electrolyte injection module 2 and the weighing module 3.

For example, the mounting base 1 is a marble platform. The mounting base 1 provided as the marble platform has a good vibration damping effect, and prevents the impact of environmental vibration on the electrolyte injection system, improving the reliability of the electrolyte injection system.

The weighing module 3 is disposed on the mounting base 1 and is in one-to-one correspondence with the electrolyte injection cup 22 for weighing the electrolyte injection cup 22. That is, the weighing module 3 can weigh the electrolyte injection cup 22 in real time to obtain the electrolyte injection amount in the electrolyte injection cup 22.

The electrolyte injection module 2 is configured to inject the electrolyte into the battery.

The electrolyte injection module 2 includes the tray 21 and the electrolyte injection cup 22, and the tray 21 is configured to carry the electrolyte injection cup 22.

It should be noted that the number of electrolyte injection cups 22 is not limited herein. For example, there may be one or more electrolyte injection cups 22.

"A plurality of" mentioned in the embodiments of this disclosure means two or more in number.

For example, the electrolyte injection cup 22 is provided in plurality. When the electrolyte injection cups 22 are in the pre-assembly state, the plurality of electrolyte injection cups 22 are carried on the tray 21.

When the electrolyte injection cup 22 is in the pre-assembly state, the electrolyte injection cup 22 is pre-assembled on the tray 21, and the weight of the electrolyte injection cup 22 is borne by the tray 21. In this case, the electrolyte injection module 2 is not assembled on the mounting base 1, and all the electrolyte injection cups 22 are disposed on the tray 21 to facilitate transferring of the electrolyte injection cups 22.

After the electrolyte injection module 2 is assembled on the mounting base 1, the electrolyte injection cup 22 switches from the pre-assembly state to the assembled state. In this case, the electrolyte injection cup 22 is assembled on the weighing module 3, and the weight of the electrolyte injection cup 22 is borne by the weighing module 3. The weighing module 3 is configured to weigh the electrolyte injection cup 22. Thus, the initial weight (initial weight is the weight before electrolyte injection, that is, the weight of the electrolyte injection cup 22 itself) of the electrolyte injection cup 22 can be weighed through the weighing module 3. After the electrolyte injection means injects the electrolyte into the electrolyte injection cup 22, the real-time weight (real-time weight is the weight of the electrolyte injection cup 22 with the electrolyte injected, that is, the weight of the electrolyte injection cup 22 itself plus the weight of the electrolyte) of the electrolyte injection cup 22 can be weighed through the weighing module 3, thereby obtaining the weight of the electrolyte injected into the electrolyte injection cup 22.

It can be understood that controlling the electrolyte injection amount by weighing the electrolyte through the weighing module 3 does not require an electrolyte injection pump for controlling the electrolyte injection amount, and thus a degassing operation is not required, improving the electrolyte preparation efficiency. Moreover, because no degassing operation is required, the electrolyte from the electrolyte room can be directly injected into the electrolyte injection cup 22 after being filtered by a filter, and is controlled by an electrolyte injection valve (the electrolyte injection valve is provided on the electrolyte delivery pipeline to control on-off of the electrolyte), which simplifies the original electrolyte injection station structure (electrolyte injection pump, containing apparatus, pipelines, and valve bodies), reduces occupied space, lowers device costs, reduces the device size, and simplifies the device pipeline structure.

For example, the electrolyte injection system includes a valve opening means. The valve opening means includes an open state and a closed state. The valve opening means is a normally closed valve opening means. Thus, the electrolyte can be injected into the electrolyte injection cup 22 in advance at any moment before the battery is combined with the electrolyte injection cup 22, which can reduce the serial processing time (electrolyte preparation time), improving the production efficiency and production throughput. That is, before the normally closed valve opening means is unlocked, the electrolyte injection cup 22 remains relatively sealed from the external environment, ensuring no electrolyte leakage during electrolyte injection weighing. Meanwhile, the electrolyte injection weighing operation can be completed when the battery is assembled on the tray, thereby improving the production throughput.

In the electrolyte injection system for battery provided in the embodiments of this disclosure, the electrolyte injection system includes the mounting base 1, the electrolyte injection module 2, and the weighing module 3. The electrolyte injection cup 22 includes the pre-assembly state and the assembled state. When the electrolyte injection cup 22 is in the pre-assembly state, the electrolyte injection cup 22 is pre-assembled on the tray 21, and the weight of the electrolyte injection cup 22 is borne by the tray 21. When the electrolyte injection cup 22 is in the assembled state, the electrolyte injection cup 22 is assembled on the weighing module 3, and the weight of the electrolyte injection cup 22 is borne by the weighing module 3, the weighing module 3 being configured to weigh the electrolyte injection cup 22. That is, the weighing module 3 is provided to weigh the electrolyte injection cup 22. To be specific, the weighing module 3 can weigh the electrolyte injection cup 22 in real time to obtain the electrolyte injection amount in the electrolyte injection cup 22, which requires neither an electrolyte injection pump for controlling the electrolyte injection amount nor a degassing operation, thereby improving the electrolyte preparation efficiency. In addition, an electrolyte from an electrolyte room can be directly injected into the electrolyte injection cup 22 after being filtered by a filter, which simplifies the structure, reduces costs, and reduces occupied space, improving the structural compactness of the electrolyte injection system.

In addition, after the electrolyte injection into the electrolyte injection cup 22 is completed, a real-time weight A₂ (A₂ is the weight of the electrolyte injection cup 22 with the electrolyte injected, that is, the weight of the electrolyte injection cup 22 itself plus the weight of the electrolyte) of the electrolyte injection cup 22 can be obtained through the weighing module 3. After the electrolyte in the electrolyte injection cup 22 is injected into the battery, the electrolyte injection cup 22 is weighed to obtain A₃ (A₃ is the weight of the electrolyte injection cup 22 itself plus the weight of the residual electrolyte). Thus, the weight of the electrolyte injected into the battery is A₂ - A₃. In other words, with the electrolyte injection method of the embodiments of this disclosure used, separate weighing processes of the battery before and after electrolyte injection can be eliminated, thereby improving the production efficiency.

In some embodiments, referring to FIGs. 1 to 6, the tray 21 includes at least one pre-assembly support position, and the electrolyte injection cup 22 includes at least one pre-assembly support portion 22a. When the electrolyte injection cup 22 is in the pre-assembly state, the electrolyte injection cup 22 is supported on the pre-assembly support position via the pre-assembly support portion 22a and is located at a first height relative to the tray 21.

The tray 21 including at least one pre-assembly support position means that the pre-assembly support position may be provided in one or plurality.

The electrolyte injection cup 22 including at least one pre-assembly support portion 22a means that the pre-assembly support portion 22a may be provided in one or plurality.

In other words, the tray 21 is provided with at least one pre-assembly support position, and the electrolyte injection cup 22 is provided with at least one pre-assembly support portion 22a. When the electrolyte injection cup 22 is in the pre-assembly state, the electrolyte injection cup 22 is supported on the pre-assembly support position via the pre-assembly support portion 22a, so as to achieve pre-assembly of the electrolyte injection cup 22.

In some embodiments, still referring to FIGs. 1 to 6, the weighing module 3 includes at least one assembly support position, and the electrolyte injection cup 22 includes at least one assembly support portion. When the electrolyte injection cup 22 is in the assembled state, the electrolyte injection cup 22 is supported on the first assembly support position via the assembly support portion and is located at a second height relative to the tray 21. The second height is not equal to the first height.

The weighing module 3 including at least one assembly support position means that the assembly support position may be provided in one or plurality.

The electrolyte injection cup 22 including at least one assembly support portion means that the assembly support portion may be provided in one or plurality.

In other words, the weighing module 3 is provided with at least one assembly support position, and the electrolyte injection cup 22 is provided with at least one assembly support portion. When the electrolyte injection cup 22 is in the assembled state, the electrolyte injection cup 22 is supported on the assembly support position via the assembly support portion, so as to achieve assembly of the electrolyte injection cup 22.

The second height being not equal to the first height means that the height of the electrolyte injection cup 22 relative to the tray 21 is different in the pre-assembly state and in the assembled state, which helps to achieve switching of the electrolyte injection cup 22 between the pre-assembly state and the assembled state.

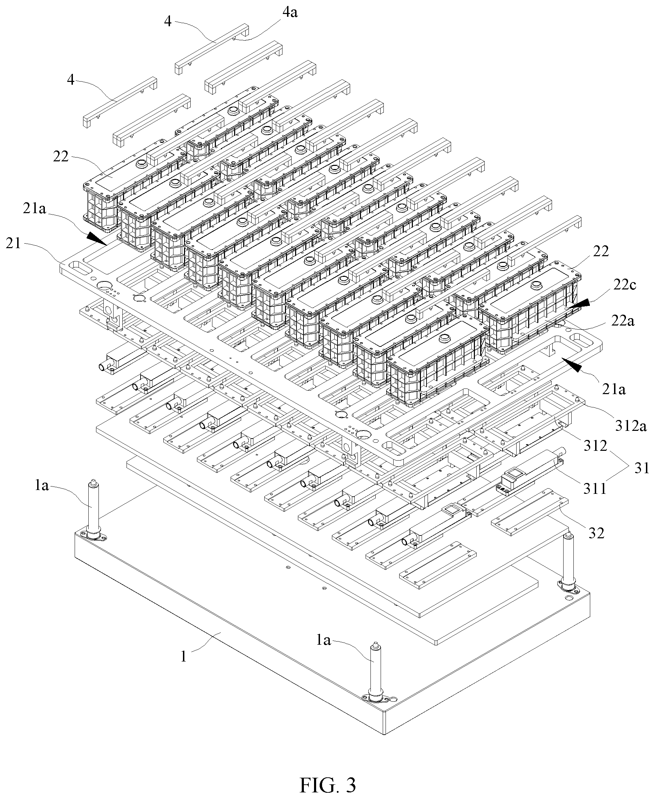

In some embodiments, referring to FIG. 3, the tray 21 is provided with a clearance area 21a, and the electrolyte injection cup 22 passes through the clearance area 21a via the weighing module 3.

The specific structure and form of the clearance area 21a are not limited herein, provided that the electrolyte injection cup 22 can pass through the clearance area 21a.

With the clearance area 21a provided on the tray 21, when the electrolyte injection cup 22 is in the pre-assembly state, the electrolyte injection cup 22 passes through the clearance area 21a and is supported on the pre-assembly support position via the pre-assembly support portion 22a, so as to achieve pre-assembly of the electrolyte injection cup 22. When the electrolyte injection cup 22 is in the assembled state, the electrolyte injection cup 22 is supported on the assembly support position via the assembly support portion, so as to achieve assembly of the electrolyte injection cup 22. For example, the assembly support position fits with the assembly support portion to lift the electrolyte injection cup 22, such that the pre-assembly support portion 22a is separated from the pre-assembly support position, and thus the weight of the electrolyte injection cup 22 is borne by the weighing module 3.

In some embodiments, referring to FIGs. 1 and 3, the mounting base 1 is provided with at least one first support column 1a, and the tray 21 is provided with at least one first support hole 21b, the tray 21 being supported on the first support column 1a via the first support hole 21b.

The mounting base 1 being provided with at least one first support column 1a means that the first support column 1a may be provided in one or plurality.

Specifically, the mounting base 1 is a rectangular marble platform. The number of first support columns 1a is four, which are disposed at four top corners of the marble platform respectively, improving the support reliability of the mounting base 1.

The tray 21 being provided with at least one first support hole 21b means that the first support hole 21b may be provided in one or plurality.

Specifically, the tray 21 is also rectangular. The number of first support holes 21b is four, which are disposed at four top corners of the tray 21 respectively and correspond to the first support columns 1a on the tray 21, improving the reliability of the connection structure between the mounting base 1 and the tray 21.

In other words, the mounting base 1 is provided with at least one first support column 1a, and the tray 21 is provided with at least one first support hole 21b, such that the first support hole 21b fits with the first support column 1a to allow the mounting base 1 to support the tray 21, which provides a simple and reliable connection structure.

It should be noted that the specific structures of the pre-assembly support portion 22a and the pre-assembly support position are not limited herein.

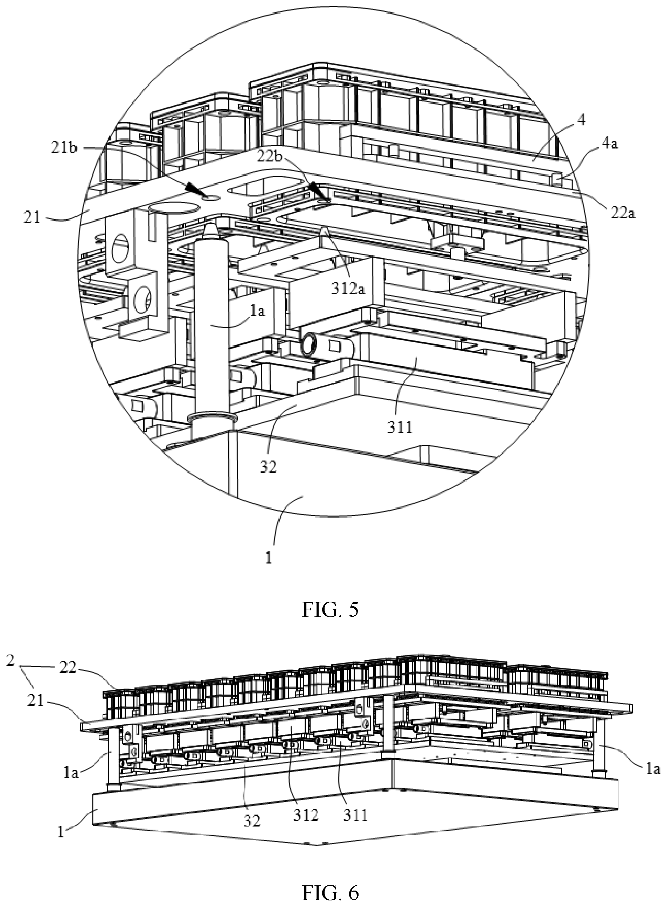

In some embodiments, referring to FIGs. 3 and 5, a pre-assembly support portion 22a protrudes from at least part of an outer side wall of the electrolyte injection cup 22. When the electrolyte injection cup 22 is in the pre-assembly state, the electrolyte injection cup 22 is supported on an upper surface of the tray 21 via the pre-assembly support portion 22a and is located at a first height relative to the tray 21.

The pre-assembly support portion 22a protruding from at least part of the outer side wall of the electrolyte injection cup 22 means that the pre-assembly support portion 22a may protrude from part of the outer side wall of the electrolyte injection cup 22, provided that the electrolyte injection cup 22 can be supported on the upper surface of the tray 21 via the pre-assembly support portion 22a on the outer side wall; or that the pre-assembly support portion 22a may protrude from the entire outer side wall of the electrolyte injection cup 22, that is, the pre-assembly support portion 22a is provided around the outer side wall of the electrolyte injection cup 22.

The electrolyte injection cup 22 being supported on the upper surface of the tray 21 via the pre-assembly support portion 22a means that the electrolyte injection cup 22 is supported on the edge of the clearance area 21a of the tray 21 via the pre-assembly support portion 22a.

The pre-assembly support portion 22a protrudes from at least part of the outer side wall of the electrolyte injection cup 22, and when the electrolyte injection cup 22 is in the pre-assembly state, the electrolyte injection cup 22 is supported on the upper surface of the tray 21 via the pre-assembly support portion 22a, which provides a simple and reliable connection structure, facilitates pre-assembly of the electrolyte injection cup 22 on the tray 21, and facilitates switching of the electrolyte injection cup 22 between the pre-assembly state and the assembled state.

In some embodiments, referring to FIGs. 3 to 6, a bottom of the electrolyte injection cup 22 is provided with at least one second support hole 22b, and the weighing module 3 is disposed below the tray 21 and includes at least one second support column 312a. When the electrolyte injection cup 22 is in the assembled state, the pre-assembly support portion 22a is spaced apart from the upper surface of the tray 21, and the electrolyte injection cup 22 is supported on the second support column 312a via the second support hole 22b and is located at a second height relative to the tray 21. The second height is not equal to the first height.

The bottom of the electrolyte injection cup 22 being provided with at least one second support hole 22b means that the second support hole 22b may be provided in one or plurality.

The weighing module 3 being disposed below the tray 21 means that the weighing module 3 is disposed between the tray 21 and the mounting base 1, which is conducive to weighing the electrolyte injection cup 22.

The weighing module 3 including at least one second support column 312a means that the second support column 312a may be provided in one or plurality.

The bottom of the electrolyte injection cup 22 is provided with at least one second support hole 22b, and the weighing module 3 is provided with at least one second support column 312a. When the electrolyte injection cup 22 is in the pre-assembly state, the electrolyte injection cup 22 is supported on the upper surface of the tray 21 via the pre-assembly support portion 22a. During the process of assembling the electrolyte injection module 2 on the mounting base 1, the second support column 312a on the weighing module 3 contacts the second support hole 22b at the bottom of the electrolyte injection cup 22 and gradually lifts the electrolyte injection cup 22, such that the pre-assembly support portion 22a of the electrolyte injection cup 22 gradually moves away from the upper surface of the tray 21. When the tray 21 is completely supported on the mounting base 1, the weighing module 3 completely lifts the electrolyte injection cup 22, and the electrolyte injection cup 22 loses contact with the tray 21, that is, the pre-assembly support portion 22a is spaced apart from the upper surface of the tray 21, so as to achieve switching of the electrolyte injection cup 22 from the pre-assembly state pre-assembled on the tray 21 to the assembled state assembled on the weighing module 3. In this case, the electrolyte injection cup 22 is located at the second height relative to the tray 21.

It should be noted that the specific structure of the weighing module 3 is not limited herein, provided that the electrolyte injection cup 22 can be weighed.

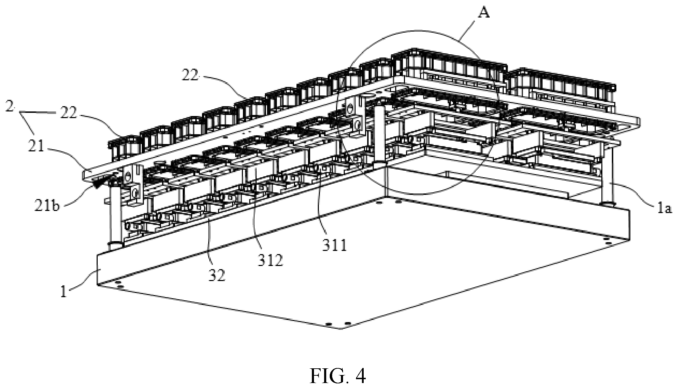

In some embodiments, referring to FIGs. 3 and 4, the weighing module 3 includes a weighing device 311 and a weighing bracket 312 disposed on the weighing device 311, the second support column 312a is disposed on the weighing bracket 312, and the weighing device 311 is configured to weigh the electrolyte injection cup 22.

The specific type of the weighing device 311 is not limited herein, provided that the electrolyte injection cup 22 can be weighed. For example, the weighing device 311 is an electronic scale.

In other words, the weighing module 3 includes the weighing device 311 and the weighing bracket 312, the weighing bracket 312 is disposed on the weighing device 311, and the weighing bracket 312 is provided with the second support column 312a for contacting the second support hole 22b at the bottom of the electrolyte injection cup 22 to support the electrolyte injection cup 22, while the weighing device 311 is located below the weighing bracket 312. Thus, when the weighing bracket 312 lifts and supports the electrolyte injection cup 22 from below, the weighing device 311 can weigh the electrolyte injection cup 22.

In some embodiments, referring to FIGs. 3 and 4, the weighing module 3 further includes a mounting plate 32, and the weighing device 311 is disposed on the mounting plate 32.

The mounting plate 32 is provided, the weighing device 311 is disposed on the mounting plate 32, and the mounting plate 32 is assembled on the mounting base 1, thereby facilitating assembly of the weighing device 311.

In some embodiments, referring to FIGs. 2 to 4, the weighing module 3 includes a plurality of weighing units 31, each weighing unit 31 includes a weighing device 311 and a weighing bracket 312, the electrolyte injection module 2 includes a plurality of electrolyte injection cups 22, and the electrolyte injection cups 22 are in one-to-one correspondence with the weighing units 31.

The weighing module 3 including a plurality of weighing units 31 facilitates simultaneous weighing of each electrolyte injection cup 22.

The number of weighing units 31 corresponds to the number of electrolyte injection cups 22, that is, the electrolyte injection cups 22 are in one-to-one correspondence with the weighing units 31.

The weighing module 3 includes a plurality of weighing units 31 and the weighing units 31 are in one-to-one correspondence with the electrolyte injection cups 22, so that the plurality of electrolyte injection cups 22 can be weighed simultaneously, thereby improving the electrolyte preparation effect.

In some embodiments, referring to FIGs. 2 to 4, the electrolyte injection module 2 further includes a guide member 4 disposed on the tray 21 for guiding movement of the electrolyte injection cup 22 along its height direction.

It can be understood that when the electrolyte injection cup 22 switches from the pre-assembly state pre-assembled on the tray 21 to the assembled state assembled on the weighing module 3, the electrolyte injection cup 22 moves along its height direction. The guide member 4 being provided to guide movement of the electrolyte injection cup 22 along its height direction can prevent deviation of the electrolyte injection cup 22 during lifting, thereby improving the reliability of the movement process of the electrolyte injection cup 22.

It should be noted that the specific structure of the guide member 4 is not limited herein.

In some embodiments, still referring to FIGs. 2 to 4, the guide member 4 is a guide bracket, a guide groove is defined between the guide bracket and the upper surface of the tray 21, a top wall of the guide groove is provided with a guide column 4a extending toward the upper surface of the tray 21, the pre-assembly support portion 22a is provided with a guide hole 22c, and the guide column 4a slidably fits with the guide hole 22c to guide movement of the electrolyte injection cup 22 along its height direction.

The guide groove is defined between the guide bracket and the upper surface of the tray 21, and the pre-assembly support portion 22a of the electrolyte injection cup 22 is disposed in the guide groove and moves within the guide groove. Thus, the guide bracket can limit the electrolyte injection cup 22 and can prevent the electrolyte injection cup 22 from being completely separated from the tray 21 to some extent.

The top wall of the guide groove being provided with the guide column 4a extending toward the upper surface of the tray 21 means that the guide column 4a extends along the height direction of the electrolyte injection cup 22.

The pre-assembly support portion 22a being provided with the guide hole 22c and the guide column 4a slidably fitting with the guide hole 22c mean that the guide bracket guides the pre-assembly support portion 22a to achieve guidance of the electrolyte injection cup 22.

The number of guide brackets is not limited herein, and the guide bracket may be provided in one or plurality. For example, the number of guide brackets is two, and the two guide brackets are located on two sides of the electrolyte injection cup 22 in the width direction respectively.

The guide bracket having the guide column 4a is provided, and the pre-assembly support portion 22a is provided with the guide hole 22c, such that the guide column 4a slidably fits with the guide hole 22c to guide movement of the electrolyte injection cup 22 along its height direction, which can prevent deviation of the electrolyte injection cup 22 during lifting. In addition, the guide bracket can also limit the electrolyte injection cup 22 and can prevent the electrolyte injection cup 22 from being completely separated from the tray 21 to some extent.

A second aspect of the embodiments of this disclosure further provides an electrolyte injection method for battery, applied to the electrolyte injection system for battery of any embodiment of this disclosure, where the electrolyte injection module 2 further includes an electrolyte injection means and a valve opening means disposed on the electrolyte injection cup 22, the valve opening means having an open state and a closed state.

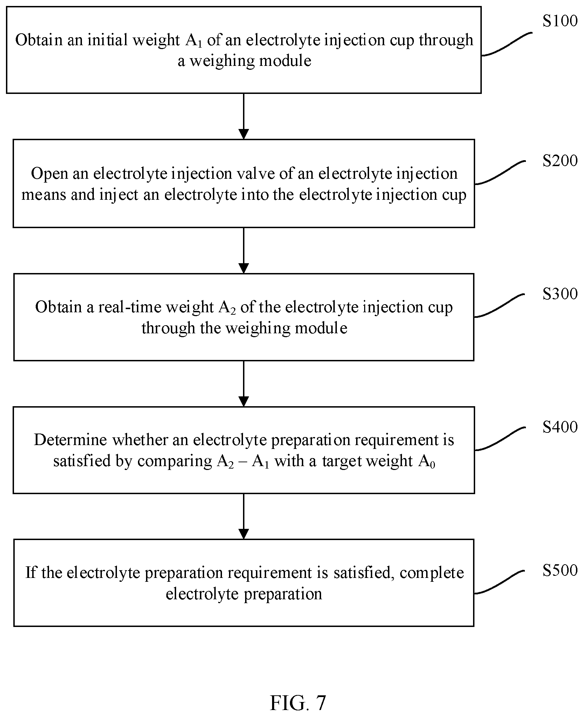

The electrolyte injection method includes an electrolyte preparation step. Referring to FIG. 7, the electrolyte preparation step includes:

Step S100. Obtain an initial weight A₁ of the electrolyte injection cup through the weighing module.

Step S200. Open an electrolyte injection valve of the electrolyte injection means and inject an electrolyte into the electrolyte injection cup.

Step S300. Obtain a real-time weight A₂ of the electrolyte injection cup through the weighing module.

Step S400. Determine whether an electrolyte preparation requirement is satisfied by comparing A₂ - A₁ with a target weight A₀.

Step S500. If the electrolyte preparation requirement is satisfied, complete electrolyte preparation.

It should be noted that the electrolyte preparation step refers to injecting the electrolyte into the electrolyte injection cup 22 for standby use.

For example, the electrolyte injection system includes the valve opening means disposed on the electrolyte injection cup 22, and the valve opening means is disposed at the bottom of the electrolyte injection cup 22.

The valve opening means includes the open state and the closed state. When the valve opening means is in the open state, the bottom of the electrolyte injection cup 22 can communicate with the outside through the valve opening means. When the valve opening means is in the closed state, the bottom of the electrolyte injection cup 22 does not communicate with the outside. That is, the valve opening means is a normally closed valve opening means. Thus, the electrolyte can be injected into the electrolyte injection cup 22 in advance at any moment before the battery is combined with the electrolyte injection cup 22, which can reduce the serial processing time (electrolyte preparation time), improving the production efficiency and production throughput. That is, before the normally closed valve opening means is unlocked, the electrolyte injection cup 22 remains relatively sealed from the external environment, ensuring no electrolyte leakage during electrolyte injection weighing. Meanwhile, the electrolyte injection weighing operation can be completed when the battery is assembled on the tray, thereby improving the production throughput.

The electrolyte injection system for battery provided in the embodiments of this disclosure includes the mounting base 1, the electrolyte injection module 2, and the weighing module 3. The electrolyte injection module 2 includes the tray 21 and the electrolyte injection cup 22. The weighing module 3 is disposed on the mounting base 1. The electrolyte injection cup 22 includes the pre-assembly state and the assembled state. When the electrolyte injection cup 22 is in the pre-assembly state, the electrolyte injection cup 22 is pre-assembled on the tray 21, and the weight of the electrolyte injection cup 22 is borne by the tray 21. When the electrolyte injection cup 22 is in the assembled state, the electrolyte injection cup 22 is assembled on the weighing module 3, and the weight of the electrolyte injection cup 22 is borne by the weighing module 3. The weighing module 3 is configured to weigh the electrolyte injection cup 22.

When the electrolyte injection cup 22 is in the pre-assembly state, the electrolyte injection cup 22 is pre-assembled on the tray 21, and the weight of the electrolyte injection cup 22 is borne by the tray 21. In this case, the electrolyte injection module 2 is not assembled on the mounting base 1, and all the electrolyte injection cups 22 are disposed on the tray 21 to facilitate transferring of the electrolyte injection cups 22.

After the electrolyte injection module 2 is assembled on the mounting base 1, the electrolyte injection cup 22 switches from the pre-assembly state to the assembled state. In this case, the electrolyte injection cup 22 is assembled on the weighing module 3, and the weight of the electrolyte injection cup 22 is borne by the weighing module 3. The weighing module 3 is configured to weigh the electrolyte injection cup 22. Thus, the initial weight (initial weight is the weight before electrolyte injection, that is, the weight of the electrolyte injection cup 22 itself) of the electrolyte injection cup 22 can be weighed through the weighing module 3. After the electrolyte injection means injects the electrolyte into the electrolyte injection cup 22, the real-time weight (real-time weight is the weight of the electrolyte injection cup 22 with the electrolyte injected, that is, the weight of the electrolyte injection cup 22 itself plus the weight of the electrolyte) of the electrolyte injection cup 22 can be weighed through the weighing module 3, thereby obtaining the weight of the electrolyte injected into the electrolyte injection cup 22.

It can be understood that controlling the electrolyte injection amount by weighing the electrolyte through the weighing module 3 does not require an electrolyte injection pump for controlling the electrolyte injection amount, and thus a degassing operation is not required, improving the electrolyte preparation efficiency. Moreover, because no degassing operation is required, the electrolyte from the electrolyte room can be directly injected into the electrolyte injection cup 22 after being filtered by a filter, and is controlled through an electrolyte injection valve, which simplifies the original electrolyte injection station structure (electrolyte injection pump, containing apparatus, pipelines, and valve bodies) and reduces occupied space.

During electrolyte preparation for the electrolyte injection cup 22, the weighing module 3 and the electrolyte injection module 2 are first assembled on the mounting base 1, the electrolyte injection cup 22 switches from the pre-assembly state to the assembled state, the weight of the electrolyte injection cup 22 is borne by the weighing module 3, and the weighing module 3 is configured to weigh the electrolyte injection cup 22. The weighing module 3 obtains the initial weight A₁ (that is, the weight of each electrolyte injection cup 22 before electrolyte injection) of each electrolyte injection cup 22. After the weighing is completed, the system records the initial weight A₁ of each electrolyte injection cup 22, opens the electrolyte injection valve of the electrolyte injection means, injects the electrolyte into the electrolyte injection cup 22, obtains the real-time weight A₂ of the electrolyte injection cup 22 through the weighing module 3, and determines whether the electrolyte preparation requirement is satisfied by comparing A₂ - A₁ with the target weight A₀. If the electrolyte preparation requirement is satisfied, electrolyte preparation is completed. In other words, the weighing module 3 is provided to weigh the electrolyte injection cup 22, so as to determine the electrolyte injection amount in the electrolyte injection cup 22, which requires neither an electrolyte injection pump for controlling the electrolyte injection amount nor a degassing operation, thereby improving the electrolyte preparation efficiency. In addition, an electrolyte from an electrolyte room can be directly injected into the electrolyte injection cup 22 after being filtered by a filter, which simplifies the structure, reduces costs, and reduces occupied space, improving the structural compactness of the electrolyte injection system. The electrolyte preparation step of this electrolyte injection method has high efficiency, and before the normally closed valve opening means is unlocked, the electrolyte injection cup 22 remains relatively sealed from the external environment, ensuring no electrolyte leakage during electrolyte injection weighing. Meanwhile, the electrolyte injection weighing operation can be completed when the battery is assembled on the tray, thereby improving the production throughput.

In addition, after the electrolyte injection into the electrolyte injection cup 22 is completed, a real-time weight A₂ (A₂ is the weight of the electrolyte injection cup 22 with the electrolyte injected, that is, the weight of the electrolyte injection cup 22 itself plus the weight of the electrolyte) of the electrolyte injection cup 22 can be obtained through the weighing module 3. After the electrolyte in the electrolyte injection cup 22 is injected into the battery, the electrolyte injection cup 22 is weighed to obtain A₃ (A₃ is the weight of the electrolyte injection cup 22 itself plus the weight of the residual electrolyte). Thus, the weight of the electrolyte injected into the battery is A₂ - A₃. In other words, with the electrolyte injection method of the embodiments of this disclosure used, separate weighing processes of the battery before and after electrolyte injection can be eliminated, thereby improving the production efficiency.

In some embodiments, the determining whether an electrolyte preparation requirement is satisfied by comparing A₂ - A₁ with the target weight A₀ includes:

Step S410. If A₂ - A₁ ≥ A₀, determine that the electrolyte preparation requirement is satisfied.

Step S420. If A₂ - A₁ < A₀, determine that the electrolyte preparation requirement is not satisfied, and continue to inject the electrolyte into the electrolyte injection cup 22.

A₂ - A₁ is the weight of the electrolyte injected into the electrolyte injection cup 22, and the target weight A₀ is greater than or equal to the weight of the electrolyte to be injected into the battery.

In other words, if the weight A₂ - A₁ of the electrolyte injected into the electrolyte injection cup 22 is greater than or equal to the target weight A₀, meaning that the electrolyte stored in the electrolyte injection cup 22 is sufficient to meet the amount of the electrolyte to be injected into the battery, the electrolyte preparation requirement is satisfied. Conversely, if the weight A₂ - A₁ of the electrolyte injected into the electrolyte injection cup 22 is less than the target weight A₀, meaning that the electrolyte stored in the electrolyte injection cup 22 does not meet the amount of the electrolyte to be injected into the battery, the electrolyte preparation requirement is not satisfied, and the electrolyte continues to be injected into the electrolyte injection cup 22 until the electrolyte preparation requirement is satisfied.

In some embodiments, the if A₂ - A₁ < A₀, determining that the electrolyte preparation requirement is not satisfied and continuing to inject the electrolyte into the electrolyte injection cup 22 further includes: if the electrolyte preparation requirement is still not satisfied within a predetermined time, issuing a system alarm prompt.

If the electrolyte injection standard is not reached within the predetermined time, that is, the electrolyte preparation requirement is not satisfied within the predetermined time, a problem may occur in the system, and a system alarm prompt is issued, so that maintenance personnel can promptly attend to the repair, avoiding wasting time.

In some embodiments, the if A₂ - A₁ ≥ A₀, determining that the electrolyte preparation requirement is satisfied includes:
determining whether to close the electrolyte injection valve based on an electrolyte flow rate q of the electrolyte injection means and a reaction time t of the electrolyte injection valve.

It can be understood that the electrolyte injection valve has a certain reaction time, meaning that when the system issues a command to close the electrolyte injection valve, the electrolyte injection valve requires a certain time to close. In the reaction time, part of the electrolyte continues to flow into the electrolyte injection cup 22, resulting in inaccurate electrolyte preparation.

Thus, in the embodiments of this disclosure, whether to close the electrolyte injection valve is determined based on the electrolyte flow rate q of the electrolyte injection means and the reaction time t of the electrolyte injection valve. In other words, the electrolyte injection amount in the reaction time of the electrolyte injection valve is calculated, and the electrolyte injection valve is closed in advance, thereby improving the electrolyte preparation accuracy.

In some embodiments, the determining whether to close the electrolyte injection valve based on an electrolyte flow rate q of the electrolyte injection means and a reaction time t of the electrolyte injection valve includes:
if A₂ - A₁ + qt ≥ A₀, closing the electrolyte injection valve; and
if A₂ - A₁ + qt < A₀, opening the electrolyte injection valve and continuing to inject the electrolyte into the electrolyte injection cup 22.

Through experiments, the electrolyte flow rate q of the electrolyte injection means is obtained, and the reaction time t of the electrolyte injection valve is measured. The electrolyte injection amount in the closing reaction time t of the electrolyte injection valve at a normal flow rate is calculated as qt, that is, the corrected target electrolyte injection amount is the original target electrolyte injection amount minus the electrolyte injection amount in the closing reaction time t of the electrolyte injection valve, namely A₂ - A₁ + qt ≥ A₀. If A₂ - A₁ + qt < A₀, the electrolyte preparation requirement is not satisfied, the electrolyte injection valve is opened, and the electrolyte continues to be injected into the electrolyte injection cup 22 until the electrolyte preparation requirement is satisfied, thereby improving the electrolyte preparation accuracy.

In some embodiments, the battery includes an on-off valve having an open state and a closed state, the electrolyte injection system further includes an evacuation module independent of the electrolyte injection module 2, and the electrolyte injection method further includes an evacuation step, where the electrolyte preparation step is performed before the evacuation step or simultaneously with the evacuation step. The evacuation step includes:
connecting an evacuation pipeline of the evacuation module with the on-off valve such that the on-off valve is in the open state;
controlling an evacuation means of the evacuation module to evacuate the battery; and
after determining completion of the evacuation, separating the evacuation pipeline from the on-off valve such that the on-off valve is in the closed state.

The battery includes the on-off valve having the open state and the closed state. That is, the on-off valve is normally closed, and when the on-off valve is not subjected to an external force, the internal cavity of the battery remains relatively sealed from the external environment.

The electrolyte injection system further includes the evacuation module independent of the electrolyte injection module 2. Thus, the evacuation pipeline of the evacuation module and the electrolyte injection pipeline of the electrolyte injection module 2 are not shared, preventing blockage of pipelines and valve bodies caused by diffusion of the residual electrolyte in the pipeline to other pipelines and valve bodies of the evacuation module during the evacuation.

The electrolyte injection method further includes the evacuation step, and the electrolyte preparation step is performed before the evacuation step or simultaneously with the evacuation step. Because both the on-off valve of the battery and the valve opening means of the electrolyte injection system are normally closed, the electrolyte can be injected into the electrolyte injection cup 22 in advance at any moment before the battery is combined with the electrolyte injection cup 22, which reduces the serial processing time (electrolyte preparation time), improving the production efficiency.

The evacuation means is, for example, a vacuum pump.

It should be noted that a single battery may be assembled on the tray and then a transfer robot evacuates the battery group on the tray, or a single battery may be evacuated and then assembled on the tray.

During evacuation, the evacuation pipeline of the evacuation module is connected to the on-off valve such that the on-off valve is in the open state, the evacuation means of the evacuation module is controlled to evacuate the battery, and after completion of the evacuation is determined, the evacuation pipeline is separated from the on-off valve such that the on-off valve is in the closed state. Thus, the evacuation step is completed. The electrolyte injection system further includes the evacuation module independent of the electrolyte injection module 2. In this way, the evacuation pipeline of the evacuation module and the electrolyte injection pipeline of the electrolyte injection module 2 are not shared, preventing blockage of pipelines and valve bodies caused by diffusion of the residual electrolyte in the pipeline to other pipelines and valve bodies of the evacuation module during the evacuation. Moreover, the electrolyte preparation step is performed before the evacuation step or simultaneously with the evacuation step. Thus, the electrolyte can be injected into the electrolyte injection cup 22 in advance at any moment before the battery is combined with the electrolyte injection cup 22, which reduces the serial processing time (electrolyte preparation time), improving the production efficiency.

In some embodiments, the electrolyte injection method further includes an electrolyte injection step after the evacuation step and the electrolyte preparation step. The electrolyte injection step includes:
connecting the valve opening means to the on-off valve such that both the valve opening means and the on-off valve are in the open state;
controlling the electrolyte injection module 2 to inject the electrolyte into the battery; and
after determining completion of the electrolyte injection, separating the valve opening means from the on-off valve such that both the valve opening means and the on-off valve are in the closed state.

The evacuation step can be completed at any stage before electrolyte injection of the battery.

During electrolyte injection, a lifting system brings the valve opening means of the electrolyte injection cup 22 into contact with the on-off valve of the battery (for example, controlling the tray 21 of the electrolyte injection cup 22 to move toward the battery, or controlling the tray 21 of the battery to move toward the electrolyte injection cup 22). First, the valve opening means of the electrolyte injection cup 22 contacts the on-off valve of the battery, and the electrolyte injection channel formed after contact remains sealed from the external environment. Because the valve opening means and the on-off valve are subjected to an interaction force, the on-off valve is forced open, and the valve opening means is also forced open. In this case, both the valve opening means and the on-off valve are in the open state, and the electrolyte injection module 2 is controlled to inject the electrolyte into the battery. After completion of the electrolyte injection is determined, the valve opening means is separated from the on-off valve such that both the valve opening means and the on-off valve are in the closed state.

In some embodiments, an opening pressure of the valve opening means is greater than or equal to an opening pressure of the on-off valve.

The opening pressure of the valve opening means being greater than the opening pressure of the on-off valve means that after the valve opening means abuts against the battery, because the valve opening means and the on-off valve are subjected to an interaction force, the on-off valve opens first and the valve opening means opens later. Thus, during electrolyte injection, the situation where the on-off valve of the battery remains closed after the valve opening means opens can be avoided, thereby alleviating the problem of electrolyte leakage.

The opening pressure of the valve opening means being equal to the opening pressure of the on-off valve means that after the valve opening means abuts against the battery, because the valve opening means and the on-off valve are subjected to an interaction force, the on-off valve and the valve opening means open simultaneously. Thus, during electrolyte injection, the situation where the on-off valve of the battery remains closed after the valve opening means opens can be avoided, thereby alleviating the problem of electrolyte leakage.

Setting the opening pressure of the valve opening means to be greater than or equal to the opening pressure of the on-off valve can avoid the situation where the on-off valve of the battery remains closed after the valve opening means opens, thereby alleviating the problem of electrolyte leakage.

In the description of this disclosure, descriptions referring to the terms "in an embodiment", "in some embodiments", "in some other embodiments", "in still some other embodiments", or "for example" mean that the specific features, structures, materials, or characteristics described with reference to the embodiment or example are included in at least one embodiment or example in the embodiments of this disclosure. In this disclosure, the illustrative expressions of these terms do not necessarily refer to the same embodiment or example. Moreover, the specific features, structures, materials, or characteristics described may be combined in a suitable manner in any one or more embodiments or examples. In addition, without mutual conflicts, persons skilled in the art may combine different embodiments or examples and features of the different embodiments or examples described in this disclosure.

The foregoing descriptions are merely preferred embodiments of this disclosure which are not intended to limit this disclosure. Persons skilled in the art understand that this disclosure may have various modifications and variations. Any modifications, equivalent replacements, and improvements made without departing from the spirit and principle of this disclosure shall fall within the protection scope of this disclosure.

## Claims

1. An electrolyte injection system for battery, comprising:
a mounting base;
an electrolyte injection module comprising a tray and an electrolyte injection cup; and
a weighing module disposed on the mounting base;
wherein the electrolyte injection cup comprises a pre-assembly state and an assembled state, wherein when the electrolyte injection cup is in the pre-assembly state, the electrolyte injection cup is pre-assembled on the tray and a weight of the electrolyte injection cup is borne by the tray; and when the electrolyte injection cup is in the assembled state, the electrolyte injection cup is assembled on the weighing module and a weight of the electrolyte injection cup is borne by the weighing module, the weighing module being configured to weigh the electrolyte injection cup.

2. The electrolyte injection system according to claim 1, wherein the tray comprises at least one pre-assembly support position, and the electrolyte injection cup comprises at least one pre-assembly support portion, wherein when the electrolyte injection cup is in the pre-assembly state, the electrolyte injection cup is supported on the pre-assembly support position via the pre-assembly support portion and is located at a first height relative to the tray.

3. The electrolyte injection system according to claim 2, wherein the weighing module comprises at least one assembly support position, and the electrolyte injection cup comprises at least one assembly support portion, wherein when the electrolyte injection cup is in the assembled state, the electrolyte injection cup is supported on the first assembly support position via the assembly support portion and is located at a second height relative to the tray, the second height being not equal to the first height.

4. The electrolyte injection system according to any one of claims 1 to 3, wherein the tray is provided with a clearance area, and the electrolyte injection cup passes through the clearance area via the weighing module.

5. The electrolyte injection system according to any one of claims 1 to 3, wherein the mounting base is provided with at least one first support column, and the tray is provided with at least one first support hole, the tray being supported on the first support column via the first support hole.

6. The electrolyte injection system according to any one of claims 1 to 5, wherein a pre-assembly support portion protrudes from at least part of an outer side wall of the electrolyte injection cup, wherein when the electrolyte injection cup is in the pre-assembly state, the electrolyte injection cup is supported on an upper surface of the tray via the pre-assembly support portion and is located at a first height relative to the tray.

7. The electrolyte injection system according to claim 6, wherein a bottom of the electrolyte injection cup is provided with at least one second support hole, and the weighing module is disposed below the tray and comprises at least one second support column, wherein when the electrolyte injection cup is in the assembled state, the pre-assembly support portion is spaced apart from the upper surface of the tray, and the electrolyte injection cup is supported on the second support column via the second support hole and is located at a second height relative to the tray, the second height being not equal to the first height.

8. The electrolyte injection system according to claim 7, wherein the weighing module comprises a weighing device and a weighing bracket disposed on the weighing device, the second support column is disposed on the weighing bracket, and the weighing device is configured to weigh the electrolyte injection cup.

9. The electrolyte injection system according to claim 8, wherein the weighing module further comprises a mounting plate, and the weighing device is disposed on the mounting plate.

10. The electrolyte injection system according to any one of claims 7 to 9, wherein the weighing module comprises a plurality of weighing units, each weighing unit comprises the weighing device and the weighing bracket, the electrolyte injection module comprises a plurality of electrolyte injection cups, and the electrolyte injection cups are in one-to-one correspondence with the weighing units.

11. The electrolyte injection system according to any one of claims 6 to 10, wherein the electrolyte injection module further comprises a guide member disposed on the tray for guiding movement of the electrolyte injection cup along its height direction.

12. The electrolyte injection system according to claim 11, wherein the guide member is a guide bracket, a guide groove is defined between the guide bracket and the upper surface of the tray, a top wall of the guide groove is provided with a guide column extending toward the upper surface of the tray, the pre-assembly support portion is provided with a guide hole, and the guide column slidably fits with the guide hole to guide movement of the electrolyte injection cup along its height direction.

13. An electrolyte injection method for battery, applied to the electrolyte injection system for battery according to any one of claims 1 to 12, wherein the electrolyte injection module further comprises an electrolyte injection means and a valve opening means disposed on the electrolyte injection cup, the valve opening means having an open state and a closed state; wherein
the electrolyte injection method comprises an electrolyte preparation step, the electrolyte preparation step comprising:
obtaining an initial weight A₁ of the electrolyte injection cup through the weighing module;
opening an electrolyte injection valve of the electrolyte injection means and injecting an electrolyte into the electrolyte injection cup;
obtaining a real-time weight A₂ of the electrolyte injection cup through the weighing module;
determining whether an electrolyte preparation requirement is satisfied by comparing A₂ - A₁ with a target weight A₀; and
if the electrolyte preparation requirement is satisfied, completing electrolyte preparation.

14. The electrolyte injection method according to claim 13, wherein the determining whether an electrolyte preparation requirement is satisfied by comparing A₂ - A₁ with a target weight A₀ comprises:
if A₂ - A₁ ≥ A₀, determining that the electrolyte preparation requirement is satisfied; and
if A₂ - A₁ < A₀, determining that the electrolyte preparation requirement is not satisfied, and continuing to inject the electrolyte into the electrolyte injection cup.

15. The electrolyte injection method according to claim 14, wherein the if A₂ - A₁ ≥ A₀, determining that the electrolyte preparation requirement is satisfied comprises:
determining whether to close the electrolyte injection valve based on an electrolyte flow rate q of the electrolyte injection means and a reaction time t of the electrolyte injection valve.

16. The electrolyte injection method according to claim 15, wherein the determining whether to close the electrolyte injection valve based on an electrolyte flow rate q of the electrolyte injection means and a reaction time t of the electrolyte injection valve comprises:
if A₂ - A₁ + qt ≥ A₀, closing the electrolyte injection valve; and
if A₂ - A₁ + qt < A₀, opening the electrolyte injection valve and continuing to inject the electrolyte into the electrolyte injection cup.

17. The electrolyte injection method according to any one of claims 14 to 16, wherein the if A₂ - A₁ < A₀, determining that the electrolyte preparation requirement is not satisfied, and continuing to inject the electrolyte into the electrolyte injection cup further comprises:
if the electrolyte preparation requirement is still not satisfied within a predetermined time, issuing a system alarm prompt.

18. The electrolyte injection method according to any one of claims 13 to 17, wherein the battery comprises an on-off valve having an open state and a closed state, the electrolyte injection system further comprises an evacuation module independent of the electrolyte injection module, and the electrolyte injection method further comprises an evacuation step, wherein the electrolyte preparation step is performed before the evacuation step or simultaneously with the evacuation step, the evacuation step comprising:
connecting an evacuation pipeline of the evacuation module to the on-off valve such that the on-off valve is in the open state;
controlling an evacuation means of the evacuation module to evacuate the battery; and
after determining completion of the evacuation, separating the evacuation pipeline from the on-off valve such that the on-off valve is in the closed state.

19. The electrolyte injection method according to claim 18, wherein the electrolyte injection method further comprises an electrolyte injection step after the evacuation step and the electrolyte preparation step, the electrolyte injection step comprising:
connecting the valve opening means to the on-off valve such that both the valve opening means and the on-off valve are in the open state;
controlling the electrolyte injection module to inject the electrolyte into the battery; and
after determining completion of the electrolyte injection, separating the valve opening means from the on-off valve such that both the valve opening means and the on-off valve are in the closed state.
